# EUROPÄISCHE PATENTANMELDUNG

(11) **EP 1 233 156 A2**
(43) Veröffentlichungstag der Anmeldung: **21.08.2002**
(21) Anmeldenummer: 01129631.6
(22) Anmeldetag: 12.12.2001
(51) Int. Cl.: F01N 3/28, F01N 7/18

(54) **Mantelgehäuse einer Abgaseinrichtung eines Kraftfahrzeuges**

(30) Priorität: 13.02.2001 DE 20102515 U
(71) Anmelder: J. Eberspächer GmbH & Co. KG, 73730 Esslingen (DE)
(72) Erfinder: Linsler, Rainer, 66740 Saarlouis (DE)

(57) **Zusammenfassung**

Bei einem Mantelgehäuse (1) einer Abgaseinrichtung eines Kraftfahrzeuges in Wickelbauweise, insbesondere eines Abgas-Schalldämpfers oder eines Abgas-Katalysators eines Personenkraftfahrzeuges, mit einem aus einer Platine gefertigten Mantel umfaßt zumindest die Längsverbindung des aus der Platine gefertigten Mantels (2) eine Laserschweißnaht (3).

## Beschreibung

Die Erfindung betrifft ein Mantelgehäuse einer Abgaseinrichtung eines Kraftfahrzeuges, insbesondere eines Abgas-Schalldämpfers oder eines Abgas-Katalysators eines Personenkraftfahrzeuges in Wickelbauweise, mit einem aus einer Platine gefertigten Mantel.

Gehäuse von Abgas-Schalldämpfern oder Abgas-Katalysatoren für Kraftfahrzeuge in Wickel- bzw. Mantelbauweise, sowie Abgas-Gehäuseteile wie Anschlußrohre, -stutzen oder -Trichter werden nach dem Stand der Technik bei erhöhten Ansprüchen an die Festigkeit, Formstabilität und Qualität aus Platinen entweder einwandig mit großer Wandstärke oder aus zwei Platinen doppelwandig ausgebildet und längs der Verbindungsstellen mittels Falz verbunden. Gegebenenfalls sorgen zusätzliche Versteifungsrippen oder Sicken im Gehäuseteil für zusätzliche Stabilität. Die Herstellung sowohl doppelwandiger Gehäuseteile als auch einwandiger Gehäuseteile mit vergleichsweise großer Wandstärke einer Platine sowie die Herstellung der Falzverbindungen sind zeit- und kostenaufwändig. Falzverbindungen sind nicht in jedem Betriebsfall abdichtend und benötigen Bauraum und Material. Insgesamt benötigt man für eine hinreichend stabile Bauweise eines gut abgedichteten Abgasgehäuses viel Material. Von Nachteil sind hohe Materialkosten, erhöhtes Gewicht der Abgasanlage, sowie hoher Benzinverbrauch des Kraftfahrzeuges.

Aufgabe der Erfindung ist Schaffung eines Mantelgehäuse einer Abgaseinrichtung eines Kraftfahrzeuges der eingangs genannten Art, welches sich durch eine einfache, gut abgedichtete und leichte Bauweise auszeichnet und gleichwohl ein gutes optischen Erscheinungsbild besitzt.

Diese Aufgabe wird durch ein Mantelgehäuse nach dem unabhängigen Anspruch 1 gelöst.

Vorteilhafte Weiterbildungen ergeben sich aus den abhängigen Ansprüchen 2 bis 4.

Wesentlicher Aspekt der Erfindung ist Laserschweißung eines Mantelgehäuses insbesondere eines Abgas-Schalldämpfers oder Abgas-Katalysators eines Kraftfahrzeuges in Wickelbauweise.

Im besonderen wird erfindungsgemäß vorgeschlagen, zumindest die Längsverbindung des aus der Platine gefertigten Mantels mit einer Laserschweißnaht zu versehen.

Der Mantel ist vorzugsweise aus zumindest zwei Zuschnitten ausgebildet, die Stoß an Stoß, doppel- oder mehrfachwandig und/oder überlappend zusammengesetzt und an den Verbindungsrändern laserverschweißt sind.

Besitzt das Mantelgehäuse Anschlußstutzen oder Anschlußtrichter, endseitige Stirnböden und/oder innere Zwischenböden, so sind vorzugsweise auch diese Bauteile des Mantelgehäuses mit dem Mantel durch Laserschweißnaht miteinander verbunden.

Vorzugsweise sind sämtliche Verbindungsstellen des Mantelgehäuses laserverschweißt.

Durch die Erfindung ist mit Vorteil ein Mantelgehäuse insbesondere eines Abgas-Schalldämpfers oder eines Abgas-Katalysators leicht, schnell, gut abgedichtet, optisch einwandfrei und insbesondere variabel und in Leichtbauweise gestaltbar, ohne Einbußen an Bauraum durch Falzverbindungen und Montagenachteile hinnehmen zu müssen, die bei bekannten Mantelgehäusen vorhanden sind. Die Abgas-Gehäuseteile sind vorzugsweise nur an denjenigen Stellen, an denen besondere Forderungen an Festigkeit gestellt werden, in der Wanddicke durch Doppelanordnung von Einzelblechen oder Überlappung von Einzelblechen oder durch Anordnung eines dort dickeren Einzelbleches partiell verstärkt und durch Laserschweißung ohne großen Aufwand schnell und sicher verbunden. An allen anderen Stellen ist die Wandstärke der Platine bzw. der Einzelbleche gering, so daß sich mit der dortigen Wandreduzierung insgesamt eine Gewichtsreduzierung und Materialeinsparung ergeben. Nach dem Stand der Technik müßte bei einwandiger Ausbildung eines Abgas-Gehäuseteils auch dort eine an sich nicht benötigte größere Dicke eines Einzelbleches bzw. einer Platine gestaltet oder auf Doppelwand-Bauweise übergegangen werden.

Mehrteilige Platinen werden noch vor einem Wickeln in die Endform aus zugeschnittenen Zusatzblechen zusammengesetzt und laserverschweißt. Die hochwertige Schweißnaht hält dem Biegebzw. Wickelvorgang der Platine in die Endform stand. Auch wird die Funktion des gefertigten Abgas-Gehäuseteils verbessert. Bei Schalldämpfern wird ein zusätzliches Schalldämpfervolumen geschaffen. Der Werkzeugaufwand einer Laserverschweißung ist vergleichsweise gering. Auch lassen sich kürzere Taktzeiten bei der Herstellung realisieren.

Die Erfindung wird nachfolgend anhand von Ausführungsbeispielen unter Bezugnahme auf die beigefügte Zeichnung näher beschrieben; es zeigen:
- Figur 1: in einer ersten Ausführungsvariante einen schematischen Teilquerschnitt eines laserverschweißten Mantelgehäuses eines Abgas-Schalldämpfers mit doppelwandiger Längsverstärkung,
- Figur 2: in einer zweiten Ausführungsvariante einen schematischen axialen Teilschnitt eines Mantelgehäuses mit stirnseitigem laserverschweißten Boden und mantelseitiger Mehrfachplatine, und
- Figur 3: einen laserverschweißten Anschlußstutzen eines Mantelgehäuses in einem schematischen axialen Teilschnitt ähnlich Figur 2.

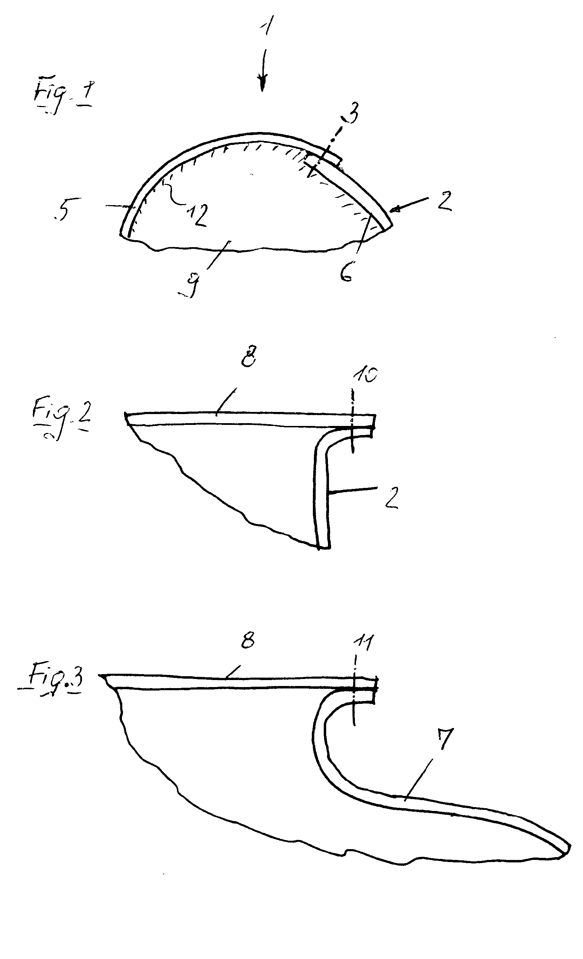

Gemäß Figur 1 umfaßt ein Mantelgehäuse 1 einer Abgaseinrichtung eines Kraftfahrzeuges in Form eines Abgas-Schalldämpfers einen aus einer zwei- oder mehrteiligen Platine gefertigten Mantel 2, dessen gewickelte Längsränder überlappt und mittels Laserschweißnaht 3 verbunden sind. Der Mantel 2 ist aus zumindest zwei Zuschnitten 5, 6 Stoß an Stoß, doppeloder mehrfachwandig und/oder überlappend zusammengesetzt und auch an den dortigen Verbindungsstellen laserverschweißt. Auch ein in Querrichtung sich erstreckender Zwischenboden 9 ist randseitig innen durch Laserschweißnaht 12 mit dem Mantel 2 verbunden.

Gemäß Figur 2 ist ein Mantel 2 bestehend aus einer gewickelten Mehrfachplatine mit einem axial endseitigen Stirnboden 8 umfangsseitig durch Laserschweißnaht 10 verbunden.

Gemäß Figur 3 ist ein konisch gewölbter Anschlußtrichter 7 mit einem endseitigen Stirnboden 8 des Mantelgehäuses durch Laserschweißnaht 11 verbunden. Der (in der Zeichnung unten gelegene, nicht veranschaulichte) erweiterte kreisförmige Umfangsrand des Anschlußtrichters 7 ist mit einem zylindrischen Mantelteil axial ausgerichtet und Stoß an Stoß randseitig ebenfalls durch Laserschweißnaht verbunden. Das Mantelteil ist aus einer einteiligen in Längsrichtung laserverschweißten Platine in Wickelbauweise gefertigt.

## Patentansprüche

1. Mantelgehäuse (1) einer Abgaseinrichtung eines Kraftfahrzeuges in Wickelbauweise, insbesondere eines Abgas-Schalldämpfers oder eines Abgas-Katalysators eines Personenkraftfahrzeuges, mit einem aus einer Platine gefertigten Mantel,
**dadurch gekennzeichnet,**
**daß** zumindest die Längsverbindung des aus der Platine gefertigten Mantels (2) eine Laserschweißnaht (3) umfaßt.

2. Mantelgehäuse nach Anspruch 1,
**dadurch gekennzeichnet,**
**daß** der Mantel (2) aus zumindest zwei Zuschnitten (5, 6) ausgebildet ist, die Stoß an Stoß, doppel- oder mehrfachwandig und/oder überlappend zusammengesetzt und an den Verbindungsrändern laserverschweißt sind.

3. Mantelgehäuse nach Anspruch 1 oder 2,
**dadurch gekennzeichnet,**
**daß** Anschlußstutzen oder Anschlußtrichter (7), endseitige Stirnböden (8) und/oder innere Zwischenböden (9) des Mantelgehäuses (1) mit dem Mantel (2) durch Laserschweißnaht (10, 11, 12) miteinander verbunden sind.

4. Mantelgehäuse nach einem der Ansprüche 1 bis 3,
**dadurch gekennzeichnet,**
**daß** sämtliche Verbindungsstellen des Mantelgehäuses (1) laserverschweißt sind.
